# EUROPEAN PATENT APPLICATION

(11) **EP 2 388 177 A1**
(43) Date of publication of application: **23.11.2011**
(21) Application number: 10731129.2
(22) Date of filing: 06.01.2010
(51) Int. Cl.: B62D 5/04, B62D 7/08

(54) **STEER-BY-WIRE STEERING DEVICE**

(30) Priority: 15.01.2009 JP 2009006254
(71) Applicant: NTN Corporation, Osaka-shi, Osaka 550-0003 (JP)
(72) Inventor: SUZUKI, Nobuyuki, Iwata-shi Shizuoka 438-0037 (JP); YAMASAKI, Tatsuya, Iwata-shi Shizuoka 438-0037 (JP)
(74) Representative: Baumgärtel, Gunnar
(86) International application number: PCT/JP2010/000036
(87) International publication number: WO 2010/082458

(57) **Abstract**

A steer-by-wire steering device, in which when a turning motor fails, a toe angle adjusting motor is converted into a drive source for steering the wheel, is provided. A steering wheel not mechanically coupled with a steering axle; a steering angle sensor; a steering reactive force motor; and a steering control unit are provided therein. In addition to a turning power transmitting mechanism for transmitting power from a turning motor to the steering axle, the use is made of a toe angle adjusting power transmitting mechanism for transmitting power from a toe angle adjusting motor to the steering axle. When the turning motor fails, a switching unit for disconnecting the turning motor from the turning power transmitting mechanism, locking of the toe angle adjusting power transmitting mechanism and turning the wheel using the toe angle adjusting motor is interposed between those transmitting mechanisms.

## Description

### CROSS REFERENCE TO THE RELATED APPLICATION

This application is based on and claims Convention priority to Japanese patent application No. 2009-006254, filed January 15, 2009, the entire disclosure of which is herein incorporated by reference as a part of this application.

### BACKGROUND OF THE INVENTION

### (Field of the Invention)

The present invention relates to a steer-by-wire steering device of a type with which steering is accomplished by means of a steering wheel that is not mechanically coupled with a steering axle for wheel turning purpose.

### (Description of Related Art)

The steer-by-wire steering device of a type designed to enable an auxiliary motor to turn steerable wheels in the event that the failure of the turning motor used to turn the steerable wheels has been suggested. (See the Patent Document 1 listed below.)

Also, in the steer-by-wire steering device of a type designed to enable left and right wheels in the front wheel system or the rear wheel system to be turned independently from each other, suggestion has been made to control the left and right wheels to assume a toe-in or toe-out to thereby secure a braking force. (See the Patent Document 2 listed below.)

### [Prior Art Literature]

[Patent Document 1] JP Laid-open Patent Publication No. 2005-349845
[Patent Document 2] JP Laid-open Patent Publication No. 2005-263182

### SUMMARY OF THE INVENTION

The technique disclosed in the Patent Document 1 listed above is aimed at providing a failsafe functionality with which the auxiliary motor is activated in the event of failure of the turning motor, but does not appear to be economical because the auxiliary motor is not activated at all so long as the turning motor is normally functioning.

On the other hand, the technique disclosed in the Patent Document 2 listed above pertains to the independent turning of the wheels, but considering that in the event of occurrence of an abnormality, the wheels come to be unable to control, there is a problem that no risk averse action can be readily taken through the normal steering.

An object of the present invention is to provide a steer-by-wire steering device in which in the event of failure of the turning motor designed to turn the wheels, a toe angle adjusting motor can be converted into a drive source for turning the wheels.

The steer-by-wire steering device designed in accordance with the present invention includes a steering wheel not mechanically coupled with a steering axle for turning; a steering angle sensor for detecting the steering angle of the steering wheel; a steering reactive force motor for applying a reactive force torque to the steering wheel; a steering control section for controlling the steering reactive force motor and a wheel turning motor for driving the steering axle, the wheel turning motor being operable to be controlled by the steering control section based on an operating condition detection signal including a signal indicative of a steering angle detected by the steering angle sensor, a wheel turning power transmitting mechanism for transmitting a power from the wheel turning motor to the steering axle to perform the wheel turning; a toe angle adjusting motor and a toe angle adjusting power transmitting mechanism for transmitting a power from the toe angle adjusting motor to the steering axle; both being provided separate from the wheel turning motor and the wheel turning power transmitting mechanism; a switching unit for disconnecting the wheel turning motor from the wheel turning power transmitting mechanism and then locking the toe angle adjusting power transmitting mechanism to cause the toe angle adjusting motor to perform the wheel turning operation in the event of failure of the wheel turning motor interposed between the wheel turning power transmitting mechanism and the toe angle adjusting power transmitting mechanism.

According to the above described construction, since separate from the wheel turning motor and the wheel turning power transmitting mechanism for transmitting the power from the wheel turning motor to the steering axle to perform the wheel turning, the use is made of the toe angle adjusting motor and the toe angle adjusting power transmitting mechanism for transmitting the power from the toe angle adjusting motor to the steering axle and, at the same time, the switching unit for disconnecting the wheel turning motor from the wheel turning power transmitting mechanism and then locking the toe angle adjusting power transmitting mechanism to cause the toe angle adjusting motor to perform the wheel turning, the toe angle adjusting motor can be converted into the drive source for the wheel turning purpose to perform the wheel turning, having superseded the wheel turning motor, in the event of failure of the wheel turning motor, that is, in the event that the wheel turning motor itself fails to operate properly or comes to be uncontrollable. Also, when and so long as the wheel turning motor is functioning normally, the toe angle adjusting motor works as a drive source for adjusting the toe angle of the vehicle wheels and, therefore, the system as a whole can be constructed at an inexpensive cost as compared with the conventional case in which an auxiliary motor that is operated only upon failure of the wheel turning motor is required.

In one embodiment of the present invention, the steering axle referred to above may have a ball screw portion defined in a portion thereof and the wheel turning power transmitting mechanism includes a ball nut engageable with the ball screw portion, such that the wheel turning is accomplished by moving the steering axle in a direction axially thereof through a rotary motion of the ball nut.

In one embodiment of the present invention, the steering axle referred to above may have a spline serration defined in a portion thereof and the toe angle adjusting power transmitting mechanism includes a splined nut, such that adjustment of the toe angle is performed by rotation of the steering axle by means of the spline nut with axial movement of the steering axle being permitted, to change the length of projection of a tie rod from the steering axle.

In one embodiment of the present invention, the spline serration and the splined nut may undergo either a sliding contact or a rolling contact.

In one embodiment of the present invention, the toe angle adjusting power transmitting mechanism referred to above may include a toe angle adjusting screw portion defined in each of opposite end portions of the steering axle and with which a respective tie rod is engaged, such that the length of protrusion of the tie rod is changed by rotation of the steering axle.

In one embodiment of the present invention, the toe angle adjusting screw portion at the opposite end portions of the steering axle may be threaded helically in respective senses opposite to each other such that rotation of the steering axle in one direction goes into protrusion of the left and right tie rods, while rotation of the steering axle in the opposite direction goes into retraction of the left and right tie rods.

In one embodiment of the present invention, the toe angle adjusting screw portion referred to above may be in the form of a trapezoidal screw.

In one embodiment of the present invention, the toe angle adjusting screw portion referred to above may be provided with a detent element.

In one embodiment of the present invention, the switching unit referred to above may include a first intermediate shaft, spline-fitted with an intermediate gear of the wheel turning power transmitting mechanism, a second intermediate shaft juxtaposed coaxially to the first intermediate shaft and spline-fitted with an intermediate gear of the toe angle adjusting power transmitting mechanism, a third intermediate shaft juxtaposed coaxially to the second intermediate shaft and fitted on a splined hub of a housing, and a linear actuator for driving the first, second and third intermediate shafts in a direction axially thereof in the event of failure of the wheel turning motor, in which when the linear actuator is activated, the first intermediate shaft is disconnected from the intermediate gear of the wheel turning power transmitting mechanism and, the second intermediate shaft is brought into spline fitting with the intermediate gear of the wheel turning power transmitting mechanism to thereby enable the toe angle adjusting motor to perform the wheel turning while the third intermediate shaft is brought into spline fitting with the intermediate gear of the toe angle adjusting power transmitting mechanism to thereby enable the toe angle adjusting power transmitting mechanism to be locked.

In one embodiment of the present invention, the linear actuator referred to above may be either a linear solenoid, a hydraulically operated cylinder or a pneumatically operated cylinder.

In one embodiment of the present invention, a spline serration on each of the intermediate shafts may be of a shape having its serration top representing an acute angle, or of a shape having its serration top tapered with no projection.. In the case of this construction, switching by the switching unit can be advantageously accomplished smoothly.

In one embodiment of the present invention, a thrust bearing may be interposed between respective mating ends of the neighboring intermediate shafts to enable those intermediate shafts to be rotatable relative to each other.

In one embodiment of the present invention, the switching unit may be so configured that while each of the intermediate shafts is moved, the second intermediate shaft is rotated about its own longitudinal axis over the angular distance equal to or greater than one pitch of the spline serration on the second intermediate shaft to perform a correction in which respective teeth of the third intermediate shaft and the second intermediate gear in the toe angle adjusting power transmitting mechanism are matched in phase with each other, thereby bringing the third intermediate shaft into spline fitting to the intermediate gear of the toe angle adjusting power transmitting mechanism.

In one embodiment of the present invention, the switching unit may be so configured that in the event of failure of the wheel turning motor, the operation of spline-fitting the third intermediate shaft with the second intermediate gear of the toe angle adjusting power transmitting mechanism is delayed relative to the operation of disconnecting the first intermediate shaft from the intermediate gear of the wheel turning power transmitting mechanism and engaging the second intermediate shaft with the intermediate gear of the wheel turning power transmitting mechanism.

In one embodiment of the present invention, one end of the third intermediate shaft, which confronts the second intermediate shaft, may be provided with a cylindrical protrusion protruding axially outwardly beyond a corresponding end of the spline serration and having a radius smaller than the radius of the bottom of the spline serration to thereby delay the operation of bringing the third intermediate shaft into spline fitting with the intermediate gear of the toe angle adjusting power transmitting mechanism.

In one embodiment of the present invention, the maximum generated torque of the toe angle adjusting motor may be chosen to be smaller than the maximum generated torque of the wheel turning motor. Since the toe angle adjustment by means of the toe angle adjusting motor and the use of the toe angle adjusting motor as a drive source for wheel turning in the event of failure of the wheel turning motor takes place one at a time during the travel of the vehicle, the maximum generated torque thereof is far lower than the torque required by the wheel turning motor during the stationary steering. Accordingly, the toe angle adjusting motor may have a size smaller than the wheel turning motor.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram showing a schematic structure of a steer-by-wire steering device according to a first embodiment of the present invention;
Fig. 2 is a sectional view showing a steering axle drive unit, employed in the steer-by-wire steering device, when it is normally functioning;
Fig. 3 is a sectional view showing the steering drive unit at the time of failure of a turning motor;
Fig. 4 is a fragmentary enlarged sectional view showing an important portion of the steering drive unit during the normal functioning thereof;
Fig. 5 is another fragmentary enlarged sectional view showing that important portion of the steering drive unit during the normal functioning thereof;
Fig. 6 is a fragmentary enlarged sectional view showing that important portion of the steering drive unit during the failure of the turning motor;
Fig. 7 is another fragmentary enlarged sectional view showing that important portion of the steering drive unit during the failure of the turning motor;
Fig. 8 is an explanatory diagram showing the shape of tooth tops of external splines employed in a standard splined shaft;
Fig. 9A is a side view showing an example of an intermediate shaft employed in the steering drive unit;
Fig. 9B is a front elevational view of the intermediate shaft shown in Fig. 9A;
Fig. 10A is a side view showing another example of the intermediate shaft employed in the steering axle drive unit;
Fig. 10B is a front elevational view of the intermediate shaft shown in Fig. 10A;
Fig. 11A is a side view showing a further example of the intermediate shaft employed in the steering axle drive unit;
Fig. 11B is a front elevational view of the intermediate shaft shown in Fig. 11A;
Fig. 12A is a side view showing a still further example of the intermediate shaft employed in the steering axle drive unit; and
Fig. 12B is a front elevational view of the intermediate shaft shown in Fig. 12A.

### DETAILED DESCRIPTION OF THE PREFERRED EMBODIMENTS

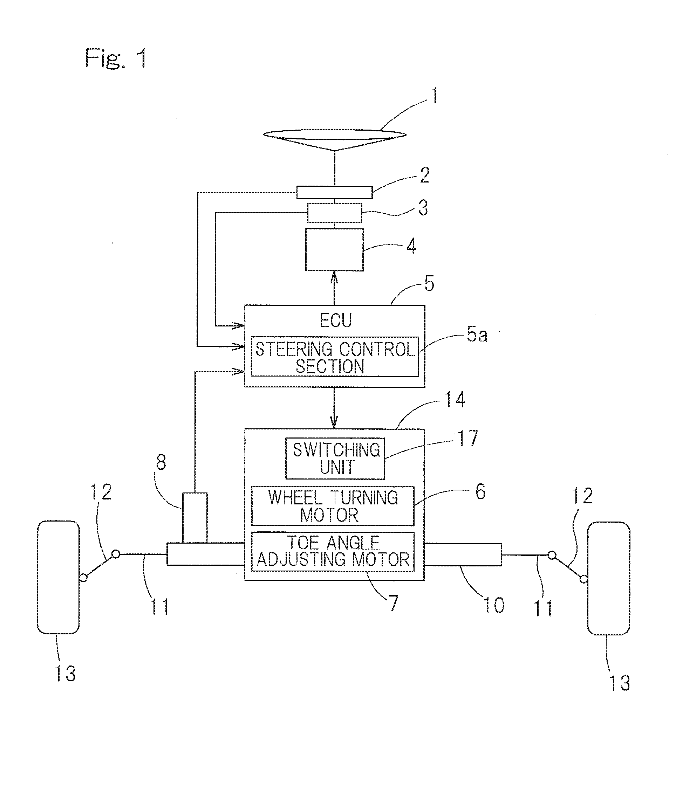

A first embodiment of the present invention will be described in detail with reference to the accompanying drawings. A steer-by-wire steering device includes, as shown in Fig. 1 in a schematic representation, a steering wheel 1 adapted to be steered by a vehicle driver, a steering angle sensor 2, a steering torque sensor 3, a steering reactive force motor 4, a steering axle 10 movable in a direction axially thereof for wheel turning and coupled with left and right vehicle wheels 13 through corresponding knuckle arms 12 and tie rods 11, a steering axle drive unit 14 for driving the steering axle 10, a turning angle sensor 8, and an ECU (Electric Control Unit) 5 including a steering control section 5a. The ECU 5 and its steering control section 5a are constituted by an electronic circuit or the like including a microcomputer and its software control program.

The steering wheel 1 is not mechanically connected with the steering axle 10 for wheel turning purpose. To the steering wheel 1, the steering angle sensor 2 and the steering torque sensor 3 are provided and the steering reactive force motor 4 is connected. The steering angle sensor 2 is a sensor for detecting the steering angle of the steering wheel 1. The steering torque sensor 3 is a sensor for detecting the steering torque acting on the steering wheel 1. The steering reactive force motor 4 is a motor for applying a reactive force torque to the steering wheel 1.

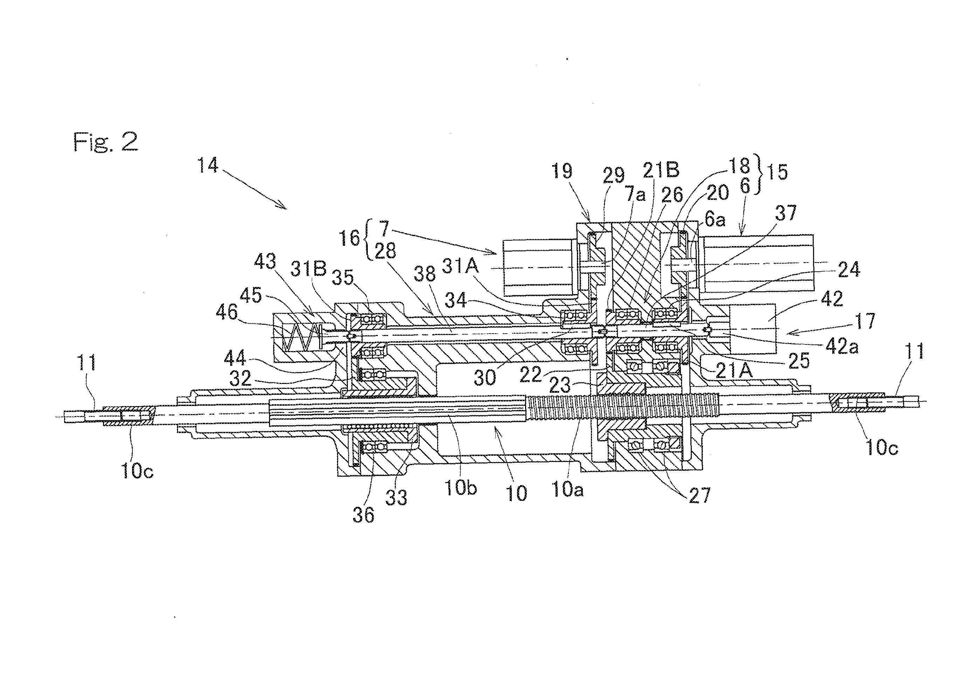

Fig. 2 is a sectional view showing the details of the steering axle drive unit 14 for driving the steering axle 10 when the steering axle drive unit 14 is normally functioning. This steering axle drive unit 14 is provided with a wheel turning mechanism 15 for driving the steering axle 10 in a direction axially thereof to turn the vehicle wheels 13, a toe angle adjusting mechanism 16 for adjusting the toe angle of the wheels 13, and a switching unit 17.

The wheel turning mechanism 15 includes a wheel turning motor 6 and a turning power transmitting mechanism 18 for transmitting a turning power from the wheel turning motor 6 to the steering axle 10 to cause the vehicle wheels to be turned. The wheel turning motor 6 is supported by a housing 19 for the steering axle drive unit 14 with its output shaft 6a held in parallel to the steering axle 10. A portion (a right hand portion as viewed in Fig. 2) of the steering axle 10 is formed with a ball screw portion 10a. The turning power transmitting mechanism 18 includes an output gear 20 fixedly mounted on the output shaft 6a of the wheel turning motor 6, a first intermediate gear 21A spline-fitted to a portion of a first intermediate shaft 37, arranged parallel to the steering axle 10, and meshed with the output gear 20, a second intermediate gear 21B mounted on and spline-fitted to another portion of the first intermediate shaft 37, a ball nut 23 threadingly mounted on the ball screw portion 10a of the steering axle 10, and an input gear 22 fixed to the ball nut 23 and meshed with the second intermediate gear 21B. The turning power transmitting mechanism 18 referred to above is so designed and so configured that a rotational output of the wheel turning motor 6 can be transmitted to the ball nut 23 through the output gear 20, the first intermediate gear 21A, the first intermediate shaft 37, the second intermediate gear 21B and the input gear 22 to rotatably drive the ball nut 23 with the steering axle 10 consequently moved in a direction axially thereof to thereby turn the vehicle wheels.

The first intermediate gear 21A is supported by the housing 19 through a rolling bearing 24. The first intermediate gear 21A is fitted to the first intermediate shaft 37 through a key 25. Also, since the second intermediate gear 21B is spline-fitted to the first intermediate shaft 37, the movement of the first intermediate shaft 37 in the direction axially thereof is permitted. The second intermediate gear 21B is supported by the housing 19 through another rolling bearing 26. The input gear 22 is also supported by the housing 19 through a rolling bearing 27.

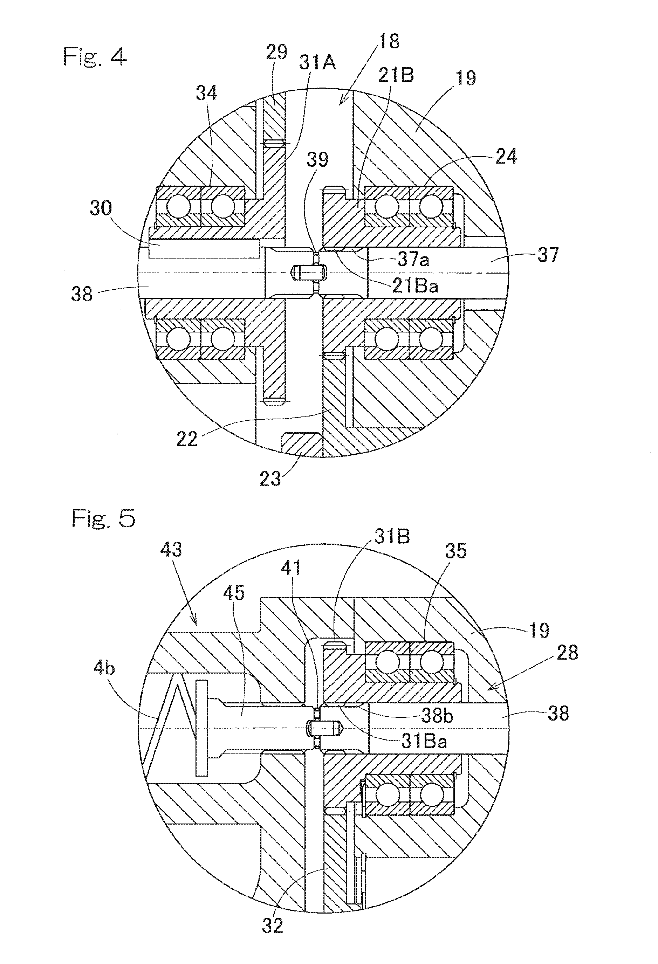

The toe angle adjusting mechanism 16 includes a toe angle adjusting motor 7 and a toe angle adjusting power transmitting mechanism 28 for transmitting a power from the toe angle adjusting motor 7 to the steering axle 10 to perform a toe angle adjustment. The toe angle adjusting motor 7 is supported by the housing 19 for the steering axle drive unit 14 with its output shaft 7a held parallel to the steering axle 10. A portion (a left hand portion as viewed in Fig. 2) of the steering axle 10 is formed with splined keys 10b. The toe angle adjusting power transmitting mechanism 28 includes an output gear 29 fixedly mounted on the output shaft 7a of the toe angle adjusting motor 7, a first intermediate gear 31A engaged with a portion of a second intermediate shaft 38 arranged coaxially with the first intermediate shaft 37 in proximate to the first intermediate shaft 37 and extending in a direction parallel to the steering axle 10, a second intermediate gear 31B mounted on and spline-fitted to another portion of the second intermediate shaft 38, an internally splined nut 33 mounted on and engaged with the splined keys 10b of the steering axle 10, and an input gear 32 fixed to the internally splined nut 33 and meshed with the second intermediate gear 31B. The toe angle adjusting power transmitting mechanism 28 is so designed and so configured that a rotational output of the toe angle adjusting motor 7 can be transmitted to the internally splined nut 33 through the output gear 29, the first intermediate gear 31A, the second intermediate shaft 38, the second intermediate gear 31B and the input gear 32 to rotatably drive the internally splined nut 33 to rotate the steering axle 10, resulting in adjustment of the toe angle of the vehicle wheels 13 by the function of toe angle adjusting screw portions 10c as will be described later. The splined keys 10b of the steering axle 10 and the internally splined nut 33 may be of a sliding contact type or a rolling contact type. The first intermediate shaft 37 and the second intermediate shaft 38 are held in axial abutment with each other with a thrust bearing 39 (best shown in Fig. 4) interposed between their neighboring ends. Accordingly, the first and second intermediate shafts 37 and 38 are held rotatable relative to each other.

The first intermediate gear 31A is supported by the housing 19 through a rolling bearing 34. Since this first intermediate gear 31A is fitted on the second intermediate shaft 38 through a key 30 and the second intermediate gear 31B is also mounted on and spline-fitted to the second intermediate shaft 38, the second intermediate shat 38 is permitted to move in a direction axially thereof. The second intermediate gear 31B referred to above is supported by the housing 19 through another rolling bearing 35. The input gear 32 is also supported by the housing 19 through a rolling bearing 36.

The toe angle adjusting mechanism 16 includes, separate from the toe angle adjusting motor 7 and the toe angle adjusting power transmitting mechanism 28, the toe angle adjusting screw portions 10c defined in each of the opposite end portions of the steering axle 10 and threadingly connected with a corresponding left or right tie rod 11. The toe angle adjusting screw portions 10c on the respective end portions of the steering axle 10 represent internally threaded portions that are threaded helically in respective senses opposite to each other so that when the steering axle 10 rotates in one of opposite directions, the left and right tie rods 11 can protrude in a direction axially outwardly of the steering axle 10, and when the steering axle 10 rotates in the other of the opposite directions, the left and right tie rods 11 can retract in a direction axially inwardly of the steering axle 10. Each of the toe angle adjusting screw portions 10c is in the form of, for example, a trapezoidal screw portion. Each of the toe angle adjusting screw portions 10c may be provided with a detent or stopper.

A switching unit 17 is so designed as to disconnect the wheel turning motor 6 from the turning power transmitting mechanism 18 and then to lock the toe angle adjusting power transmitting mechanism 28 so that the toe angle adjusting motor 7 can be converted into a drive source for wheel turning purpose. This switching unit 17 is disposed generally intermediate between the turning power transmitting mechanism 18 and the toe angle adjusting power transmitting mechanism 28 and includes a linear actuator 42 for driving the first and second intermediate shafts 37 and 38 in a direction axially thereof, and a locking mechanism 43 or locking the toe angle adjusting power transmitting mechanism 28. The linear actuator 42 is in the form of, for example, a linear solenoid, a hydraulically operated cylinder or a pneumatically operated cylinder and has an actuating rod 42a held in engagement with one of the opposite ends of the first intermediate shaft 37, which is opposite to the other of those ends of the first intermediate shaft 37 then held in engagement with the second intermediate shaft 38. Although not shown, a thrust bearing is disposed between the mating ends of the first intermediate shaft 37 and the actuating rod 42a of the linear actuator 42 and, accordingly, the first intermediate shaft 37 is rotatable relative to the actuating rod 42a.

The locking mechanism 43 for the switching unit 17 is made up of a third intermediate shaft 45 spline-fitted to a splined hub 44 formed in the housing 19 and axially juxtaposed to the second intermediate shaft 38 in coaxial relation with the first and second intermediate shafts 37 and 38, and a coiled spring 46 for elastically urging the third intermediate shaft 45 towards an advanced position at which the second intermediate shaft 38 is axially pushed to a protruding side. A thrust bearing 41 (best shown in Fig. 5) is disposed between respective mating ends of the third intermediate shaft 45 and the second intermediate shaft 38 so that the second intermediate shaft 38 can be rotatable relative to the third intermediate shaft 45.

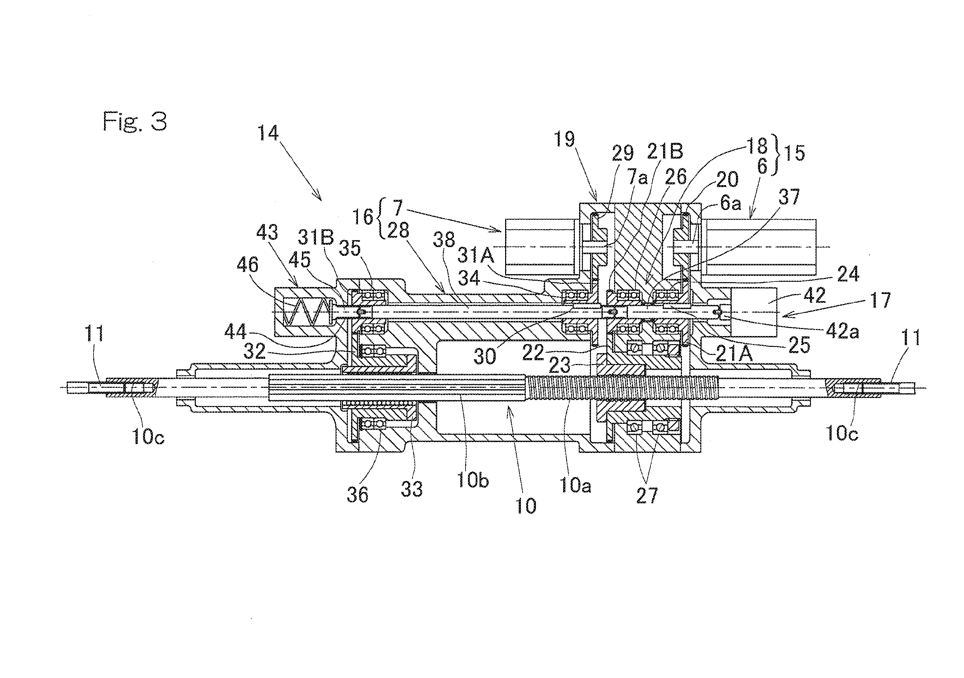

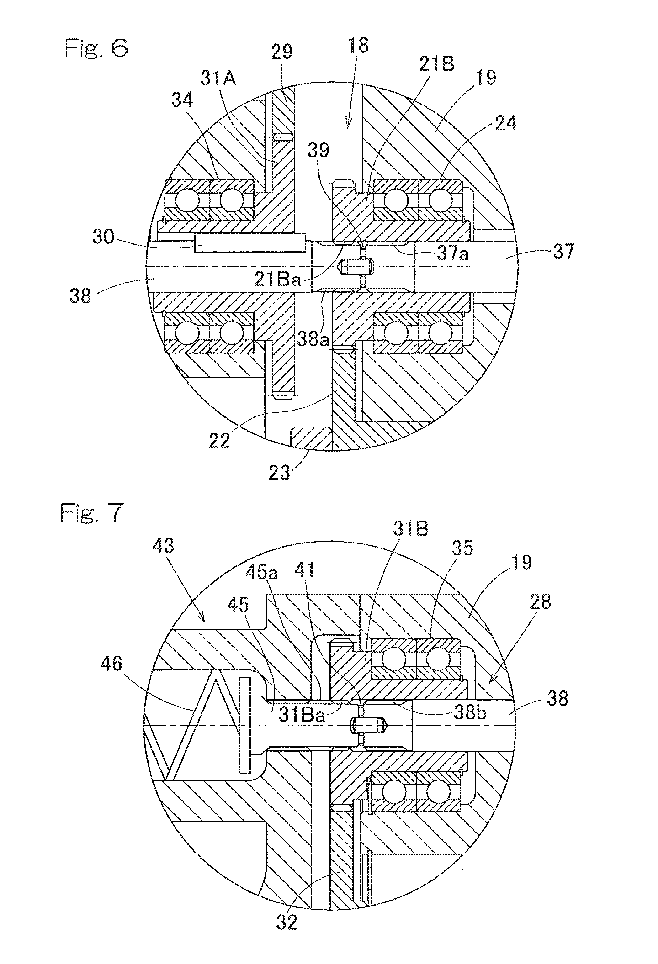

The condition of Fig. 2, in which the wheel turning motor 6 is functioning normally, is assumed when and so long as the linear actuator 42 of the switching unit 17 is not activated. Under this condition as shown in Fig. 2, internal teeth 21Ba of the second intermediate gear 21B forming a part of the turning power transmitting mechanism 18 are engaged with spline serrations 37a of the first intermediate shaft 37 as best shown in Fig. 4 on an enlarged scale. Also, as best shown in Fig. 5 on an enlarged scale, internal teeth 31Ba of the second internal gear 31B of the toe angle adjusting power transmitting mechanism 28 are engaged with spline serrations 38b of the second intermediate shaft 38. Fig. 3 illustrates the condition, in which the linear actuator 42 is activated, that is, the wheel turning motor 6 fails to operate. Under this condition, the actuating rod 42a of the linear actuator 42 is retracted rightwards as viewed therein with the first and second intermediate shafts 37 and 38 consequently axially pushed by the third intermediate shaft 45, which is a part of the locking mechanism 43, in a direction rightwards as viewed therein. In the wheel turning power transmitting mechanism 18, the movement of the first and second intermediate shafts 37 and 38 in the manner described above results in disengagement of the spline serrations 37a of the first intermediate shaft 37 from the second intermediate gear 21B as best shown in Fig. 6 on an enlarged scale, followed by fitting of the internal teeth 21Ba of the second intermediate gear 21B with the spline serrations 38a of the second intermediate shaft 38. In other words, in place of the wheel turning motor 6, the toe angle adjusting motor 7 is drivingly coupled with the wheel turning power transmitting mechanism 18 as a drive source for the wheel turning mechanism 15. On the other hand, in the toe angle adjusting power transmitting mechanism 28, the second intermediate gear 31B, which has been engaged with the spline serrations 38b of the second intermediate shaft 38, is disengaged from the spline serrations 38b, and instead thereof the internal teeth 31Ba of the second intermediate gear 31B are brought into engagement with the spline serrations 45a of the third intermediate shaft 45 as best shown in Fig. 7 on an enlarged scale. Thus, the toe angle adjusting motor 7 is decoupled from the toe angle adjusting power transmitting mechanism 28 and, at the same time, the toe angle adjusting power transmitting mechanism 28 is locked by the locking mechanism 43.

The steering control section 5a of the ECU 5 controls the steering reactive force motor 4, the wheel turning motor 6, the toe angle adjusting motor 7 and the linear actuator 42 of the switching unit 17. More specifically, the steering control section 5a is operable to set a target steering reactive force based on a signal indicative to the steering angle detected by the steering angle sensor 2, a signal indicative of the wheel rotational speed detected by a vehicle speed sensor (not shown) and various signals detected of vehicle operating conditions, and then to feed back a signal indicative of the steering torque, detected by the steering torque sensor 3, so that the actual steering reactive force torque may match with the target steering reactive force to thereby control the steering reactive force motor 4. The steering control section 5a is also operable to activate the linear actuator 42, forming the switching unit 17, in the event of failure of the wheel turning motor 6 to thereby disconnect the wheel turning motor 6 from the wheel turning power transmitting mechanism 18, lock the toe angle adjusting power transmitting mechanism 28 and effect the wheel diversion by means of the toe angle adjusting motor 7.

The operation taking place in the steering axle drive unit 14 of the steer-by-wire steering device will now be described in detail. In the event that the wheel turning motor 6 functioning normally, as best shown in Fig. 2, not only is the rotation of the output shaft 6a of the wheel turning motor 6 transmitted to the ball nut 23 through the wheel turning power transmitting mechanism 18, but the rotation of the output shaft 7a of the toe angle adjusting motor 7 is also transmitted to the internally splined nut 33 through the toe angle adjusting power transmitting mechanism 28. Rotation of the ball nut 23 engaged with the ball screw portion 10a of the steering axle 10 results in the axial movement of the steering axle 10 to thereby turn the wheels 13. Since the internally splined nut 33 of the toe angle adjusting power transmitting mechanism 28 is mounted on the steering axle 10 with the internal thread thereof engaged with the spline serrations 10b of the steering axle 10, the steering axle 10 is driven to move in the direction axially thereof. Rotation of the internally splined nut 33 engaged with the spline serrations 10b of the steering axle 10 results in rotation of the steering axle 10, which in turn results in advance or retraction of the tie rods 11 that are engaged with the toe angle adjusting screw portions 10c at the opposite ends of the steering axle 10, thereby performing a toe angle adjustment.

In the event of failure of the wheel turning motor 6, the linear actuator 42 forming the switching unit 17 is activated in response to a command fed from the steering control section 5a of the ECU 5 with the actuating rod 42a thereof consequently advanced or retracted. As a result, the third intermediate shaft 45 of the locking mechanism 43 is urged by the effect of a biasing force of the coiled spring 46 and, therefore, the first and second intermediate shafts 37 and 38 are moved axially rightwards as viewed in Fig. 3. At this time, the first intermediate shaft 37 is disengaged from the second intermediate gear 21B of the wheel steering power transmitting mechanism 18, and then the second intermediate shaft 38 is engaged with the intermediate gear 21B and, accordingly, the drive source for the wheel turning mechanism 15 is switched over from the wheel turning motor 6 to the toe angle adjusting motor 7.

On the other hand, in the toe angle adjusting power transmitting mechanism 28, the second intermediate shaft 38 is disengaged from the second intermediate gear 31B, and then the third intermediate shaft 45 of the locking mechanism 43 is engaged with the intermediate gear 31B with the toe angle adjusting power transmitting mechanism 28 consequently held in a locked state. In other words, the toe angles of the wheels 13 are maintained at constant values.

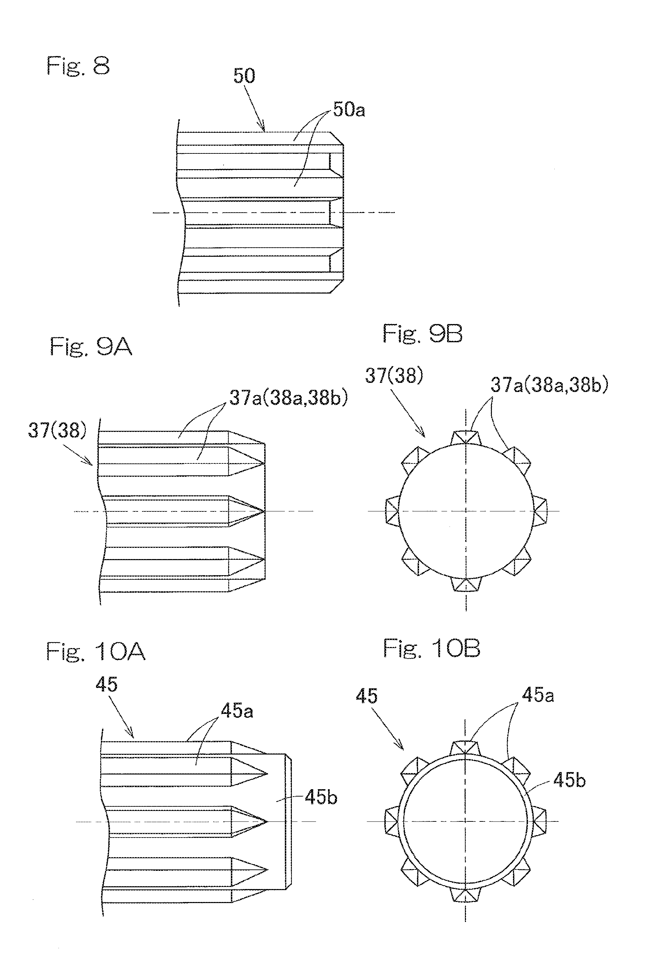

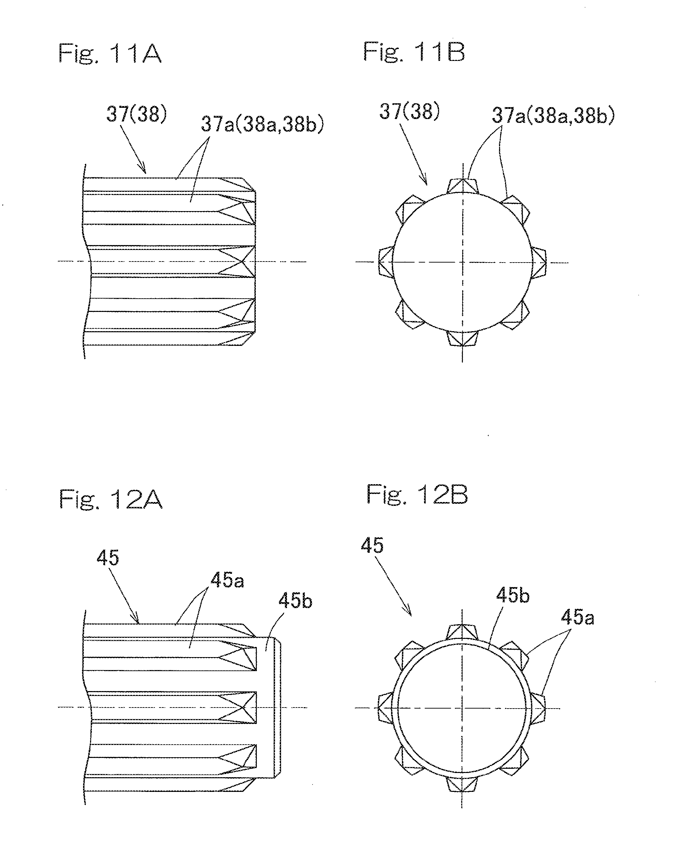

In order to accomplish the foregoing switching operation smoothly, the spline serrations 37a of the first intermediate shaft 37, the spline serrations 38a and 38b of the second intermediate shaft 38, and the spline serrations 45a of the third intermediate shaft 45 are each preferably formed with axial end portions representing an acute angle as shown in Figs. 9A and 9B or Figs. 10A and 10B, in contrast to the standard shaft 50 having axially extending serrations 50a each having axial end portions representing a trapezoidal shape as shown in Fig. 8. Alternatively, as best shown in Figs. 11A and 11B or Figs. 12A and 12B, each of the axially extending spline serrations 37a, 38a, 38b or 45a may have its axial end portion representing a tapered shape having no radially outer top projection.

Also, during the switching operation that takes place in the manner described hereinbefore, while the first and second intermediate shafts 37 and 38 are moved together in the direction axially thereof, the second intermediate shaft 38 is rotated about its own longitudinal axis over the angular distance equal to or greater than one pitch of the spline serrations 38b on the second intermediate shaft 38 to perform the correction in which the spline serrations 45a on the third intermediate shaft 45 and the internal teeth 31Ba of the second intermediate gear 31B in the toe angle adjusting power transmitting mechanism 28 are matched in phase with each other. With the correction so performed, fitting of the third intermediate shaft 45 with the intermediate gear 31B for the purpose of locking the toe angle adjusting power transmitting mechanism 28 can be accomplished smoothly with no erroneous operation occurring.

In addition, during the switching operation that takes place in the manner described hereinbefore, relative to the operation of disengaging the first intermediate shaft 37 from the second intermediate gear 21B of the wheel turning power transmitting mechanism 18 and then engaging the second intermediate shaft 38 with the intermediate gear 21B, the operation of spline-fitting the third intermediate shaft 45 with the second intermediate gear 31B of the toe angle adjusting power transmitting mechanism 28 is delayed. Accordingly, the operation of locking the toe angle adjusting power transmitting mechanism 28 takes place after the switching of the drive source for wheel turning purpose from the wheel turning motor 6 onto the toe angle adjusting motor 7 has been terminated, those operations can be performed accurately with no error occurring therein.

In order to set up such a time lag in operation as hereinabove described, one end of the third intermediate shaft 45, which confronts the second intermediate shaft 38, may be provided with a cylindrical protrusion 45b protruding axially outwardly beyond corresponding ends of the spline serrations 45a and having a radius smaller than the radius of the bottom of the spline serrations 45a as shown in, for example, Figs. 10A and 10B or Figs. 12A or 12B. The provision of the cylindrical protrusion 45b in the third intermediate shaft 45 is effective to assuredly delay the timing at which the third intermediate shaft 45 is fitted to the intermediate gear 31B.

As hereinbefore fully described, in the steer-by-wire steering device, separate from the wheel turning motor 6 and the wheel turning power transmitting mechanism 18 for transmitting the power from the wheel turning motor 6 to the steering axle 10 to perform the wheel turning, the use is made of the toe angle adjusting motor 7 and the toe angle adjusting power transmitting mechanism 28 for transmitting the power from the toe angle adjusting motor 7 to the steering axle 10 and, at the same time, the switching unit 17 for disconnecting the wheel turning motor 6 from the wheel turning power transmitting mechanism 18 and then locking the toe angle adjusting power transmitting mechanism 28 to cause the toe angle adjusting motor 7 to perform the wheel turning operation in the event of failure of the wheel turning motor 6 is interposed between the wheel turning power transmitting mechanism 18 and the toe angle adjusting power transmitting mechanism 28. Accordingly, even though the wheel turning motor 6 used to turn the vehicle wheels 13 fails, the toe angle adjusting motor 7 can be used as a drive source for turning the vehicle wheels 13. Also, even when and so long as the wheel turning motor 6 is functioning normally, the toe angle adjusting motor 7 works as a drive source for adjusting the toe angle of the vehicle wheels 13 and, therefore, the system as a whole can be constructed at an inexpensive cost as compared with the conventional case in which an auxiliary motor that is operated only upon failure of the wheel turning motor 6 is required.

It is to be noted that since the toe angle adjustment by means of the toe angle adjusting motor 7 and the use of the toe angle adjusting motor 7 as a drive source for wheel turning in the event of failure of the wheel turning motor 6 takes place one at a time during the travel of the vehicle, the maximum generated torque thereof is far lower than the torque required by the wheel turning motor 6 during the stationary steering. Accordingly, the toe angle adjusting motor 7 may have a size smaller than the wheel turning motor 6.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: Steering wheel
- 2: Steering angle sensor
- 4: Steering reactive force motor
- 5a: Steering control section
- 6: Wheel turning motor
- 7: Toe angle adjusting motor
- 10: Steering axle
- 10a: Ball screw portion
- 10b: Spline serration
- 10c: Toe angle adjusting screw portion
- 11: Tie rod
- 17: Switching unit
- 18: Wheel turning power transmitting mechanism
- 19: Housing
- 21B: Intermediate gear of the wheel turning power transmitting mechanism
- 23: Ball nut
- 28: Toe angle adjusting power transmitting mechanism
- 31B: Intermediate gear of the toe angle adjusting power transmitting mechanism
- 33: Internally splined nut
- 37: First intermediate shaft
- 38: Second intermediate shaft
- 37a, 38a, 38b: Spline serration
- 39, 41: Thrust bearing
- 42: Linear actuator
- 44: Splined hub
- 45: Third intermediate shaft
- 45a: Spline serration
- 45b: Cylindrical portion of the third intermediate shaft

## Claims

1. A steer-by-wire steering device comprising:
a steering wheel not mechanically coupled with a steering axle for turning;
a steering angle sensor for detecting the steering angle of the steering wheel;
a steering reactive force motor for applying a reactive force torque to the steering wheel;
a steering control section for controlling the steering reactive force motor and a wheel turning motor for driving the steering axle, the wheel turning motor being operable to be controlled by the steering control section based on an operating condition detection signal including a signal indicative of a steering angle detected by the steering angle sensor,
a wheel turning power transmitting mechanism for transmitting a power from the wheel turning motor to the steering axle to perform the wheel turning
a toe angle adjusting motor and a toe angle adjusting power transmitting mechanism for transmitting a power from the toe angle adjusting motor to the steering axle; both being provided separate from the wheel turning motor and the wheel turning power transmitting mechanism; and
a switching unit for disconnecting the wheel turning motor from the wheel turning power transmitting mechanism and then locking the toe angle adjusting power transmitting mechanism to cause the toe angle adjusting motor to perform the wheel turning operation in the event of failure of the wheel turning motor interposed between the wheel turning power transmitting mechanism and the toe angle adjusting power transmitting mechanism.

2. The steer-by-wire steering device as claimed in claim 1, wherein the steering axle has a ball screw portion defined in a portion thereof and the wheel turning power transmitting mechanism includes a ball nut engageable with the ball screw portion, such that the wheel turning is accomplished by moving the steering axle in a direction axially thereof through a rotary motion of the ball nut.

3. The steer-by-wire device as claimed in claim 1, wherein the steering axle has a spline serration defined in a portion thereof and the toe angle adjusting power transmitting mechanism includes a splined nut, such that adjustment of the toe angle is performed by rotation of the steering axle by means of the spline nut with axial movement of the steering axle being permitted, to change the length of projection of a tie rod from the steering axle.

4. The steer-by-wire steering device as claimed in claim 3, wherein the spline serration and the splined nut undergo a sliding contact with each other.

5. The steer-by-wire steering device as claimed in claim 3, wherein the spline serration and the splined nut undergo a rolling contact.

6. The steer-by-wire steering device as claimed in claim 3, wherein the toe angle adjusting power transmitting mechanism includes a toe angle adjusting screw portion defined in each of opposite end portions of the steering axle and with which a respective tie rod is engaged, such that the length of protrusion of the tie rod is changed by rotation of the steering axle.

7. The steer-by-wire steering device as claimed in claim 6, wherein the toe angle adjusting screw portion at the opposite end portions of the steering axle are threaded helically in respective senses opposite to each other such that rotation of the steering axle in one direction goes into protrusion of the left and right tie rods, while rotation of the steering axle in the opposite direction goes into retraction of the left and right tie rods.

8. The steer-by-wire steering device as claimed in claim 3, wherein the toe angle adjusting screw portion is in the form of a trapezoidal screw.

9. The steer-by-wire steering device as claimed in claim 3, wherein the toe angle adjusting screw portion is provided with a detent element.

10. The steer-by-wire steering device as claimed in claim 1, wherein the switching unit comprises a first intermediate shaft, spline-fitted with an intermediate gear of the wheel turning power transmitting mechanism, a second intermediate shaft juxtaposed coaxially to the first intermediate shaft and spline-fitted with an intermediate gear of the toe angle adjusting power transmitting mechanism, a third intermediate shaft juxtaposed coaxially to the second intermediate shaft and fitted on a splined hub of a housing, and a linear actuator for driving the first, second and third intermediate shafts in a direction axially thereof in the event of failure of the wheel turning motor, in which when the linear actuator is activated, the first intermediate shaft is disconnected from the intermediate gear of the wheel turning power transmitting mechanism and, the second intermediate shaft is brought into spline fitting with the intermediate gear of the wheel turning power transmitting mechanism to thereby enable the toe angle adjusting motor to perform the wheel turning while the third intermediate shaft is brought into spline fitting with the intermediate gear of the toe angle adjusting power transmitting mechanism to thereby enable the toe angle adjusting power transmitting mechanism to be locked.

11. The steer-by-steer steering device as claimed in claim 10, wherein the linear actuator is a linear solenoid.

12. The steer-by-steer steering device as claimed in claim 10, wherein the linear actuator is a hydraulically operated cylinder.

13. The steer-by-wire steering device as claimed in claim 10, wherein the linear actuator is a pneumatically operated cylinder.

14. The steer-by-wire steering device as claimed in claim 10, wherein a spline serration on each of the intermediate shafts is of a shape having its serration top representing an acute angle.

15. The steer-by-wire steering device as claimed in claim 10, wherein a spline serration on each of the intermediate shafts of a shape having its serration top tapered with no projection.

16. The steer-by-wire steering device as claimed in claim 10, further comprising a thrust bearing interposed between respective mating ends of the neighboring intermediate shafts to enable those intermediate shafts to be rotatable relative to each other.

17. The steer-by-wire steering device as claimed in claim 10, wherein the switching unit is so configured that while each of the intermediate shafts is moved, the second intermediate shaft is rotated about its own longitudinal axis over the angular distance equal to or greater than one pitch of the spline serration on the second intermediate shaft to perform a correction in which respective teeth of the third intermediate shaft and the second intermediate gear in the toe angle adjusting power transmitting mechanism are matched in phase with each other, thereby bringing the third intermediate shaft into spline fitting to the intermediate gear of the toe angle adjusting power transmitting mechanism.

18. The steer-by-wire steering device as claimed in claim 10, wherein the switching unit is so configured that in the event of failure of the wheel turning motor, the operation of spline-fitting the third intermediate shaft with the second intermediate gear of the toe angle adjusting power transmitting mechanism is delayed relative to the operation of disconnecting the first intermediate shaft from the intermediate gear of the wheel turning power transmitting mechanism and engaging the second intermediate shaft with the intermediate gear of the wheel turning power transmitting mechanism.

19. The steer-by-wire steering device as claimed in claim 18, wherein one end of the third intermediate shaft that confronts the second intermediate shaft, is provided with a cylindrical protrusion protruding axially outwardly beyond a corresponding end of the spline serration and having a radius smaller than the radius of bottom of the spline serration to thereby delay the operation of bringing the third intermediate shaft into spline fitting with the intermediate gear of the toe angle adjusting power transmitting mechanism..

20. The steer-by-wire steering device as claimed in claim 1, wherein the maximum generated torque of the toe angle adjusting motor is chosen to be smaller than the maximum generated torque of the wheel turning motor.
